# EUROPEAN PATENT SPECIFICATION

(11) **EP 2 384 614 B1**
(45) Date of publication and mention of the grant of the patent: **19.09.2012**
(21) Application number: 11158135.1
(22) Date of filing: 14.03.2011
(51) Int. Cl.: A01D 46/26

(54) **Apparatus for picking olives and the like**
Vorrichtung zum Ernten von Oliven und dergleichen
Appareil de ramassage d'olives et similaires

(30) Priority: 04.05.2010 IT BO20100280
(43) Date of publication of application: 09.11.2011
(73) Proprietor: Minelli Elettromeccanica, 42015 Correggio (RE) (IT)
(72) Inventor: Minelli, Ermanno, 42015 Correggio (RE) (IT)
(74) Representative: Schiavone, Cristina

(56) References cited:
- EP-A1- 1 943 895
- EP-A2- 1 621 063
- WO-A2-2007/129207
- CH-A5- 639 530

## Description

### Technical Field

The present invention regards an apparatus for picking olives and the like.

### Background Art

It has been known that to perform the picking of olives or other similar small dimensions products are used picking apparatuses, commonly named beaters, suitable to shake the branches of the trees in order to cause the detachment and then the falling of the fruits.

Such picking apparatuses or beaters generally provide a support rod, preferably of the telescopic type, suitable to be carried by an agricultural machine or manually by an operator at a suitable end handle. At the free end the support rod carries a series of shaker elements, having a shape suitable for their insertion among the branches, suitable to be actuated in rotation or in a tilting motion by means of actuation members of the pneumatic or electric type.

In particular, nowadays are known beaters comprising comb shaped beating elements, usually arranged in couple on the support at the end of the support rod. Such elements are suitable to be actuated tilting between a closed configuration, having the combs arranged facing on parallel planes, and an open configuration, with diverging combs.

Patent application EP-A-1943895 illustrates an apparatus for picking olives and similar products comprising a pair of combs positioned at the top of a support rod. Actuation means ii provided for actuating the combs through drive means comprising a drive wheel and a driven wheel. A connection rod is articulated at one end eccentric to the driven wheel and it is further articulated at the other end to an intermediate member further connected to the comb sectors in a way to cause the comb sectors to move between an opening and a closing configuration.

Patent applications EP-A-1621063 and CH-A-639530 illustrate further examples of the same type of picking apparatus.

Moreover patent application EP1040747 A1 discloses a beater comprising a pair of combs each formed by a transverse tubular element whereon are mounted a plurality of fork-shaped prongs.

Patent application EP1175823 A1 illustrates an apparatus for picking fruits from the trees comprising at least one shaker member tilting by means of suitable drive means. In particular, each shaker member comprises a support element to which a plurality of prongs is fixed in a rigid way. The shaker element is carried at the top end by a support rod, in such a way as to enable the use of the apparatus to heights greater than two meters.

Patent application EP1621063 A1 discloses at its time a beater suitable to be actuated by means of an electric actuator. The apparatus comprises, at the end of a handling rod, a pair of opposite tilting sectors, each carrying respective rods fixed in a comb- like or rake-like manner. The sectors are articulated to a support body and to tilting actuator means actuated, through suitable gear drive means, by an electric motor rigidly fixed to the handling rod at the handle portion.

Even if the introduction on the market of the described apparatuses made faster and easier the olives picking operations, such known apparatuses have at the same time non negligible drawbacks. In fact they require actuation and drive means for the tilting motion extremely encumbering, which can damage the branches of the fruit trees, in the moment wherein the beater elements are actuated in motion or simply inserted between the branches. The branches of the trees can be damaged, for example scratched or seized, at the germinable part, compromising in such a way the production of fruits for the successive year. Such a risk gets worse due to the vibrations caused by the actuation of the beater elements.

Moreover the known devices turn out to be, because of the overall dimensions, very inconvenient and heavy both to handle and to carry during the picking operations.

### Disclosure of invention

The task of the present invention is that of solving the aforementioned problems, devising an apparatus which allows to perform in an efficient and safe way the picking of olives and the like.

Within such a task, a scope of the present invention is that of providing an apparatus for picking olives and the like that has a reduced weight for a better handling.

Another scope of the present invention is that of providing an apparatus for picking olives and the like which has a compact structure and reduced encumbrance.

A further object of the present invention is that of providing an apparatus for picking olives and the like having a simple conception, a reliable structure and easy use for the operator.

The above mentioned scopes are attained, according to the present invention, by the apparatus for picking olives and the like according to claim 1.

The apparatus according to the invention substantially comprises a handling device, wherein gear means are provided with a drive wheel axially constrained to a drive shaft and with a driven wheel carried rotatably about the axis of a bearing pin transverse to the drive shaft. A connecting rod transmission member articulated in position eccentric to said driven wheel for transforming a rotation motion into alternate motion is articulated directly, that is without intermediate means, to at least one of said first and second comb sector, in a way as to perform the actuation of said comb sectors in a motion substantially tilting between a divaricated or opening configuration and an approached or closing configuration. The direct articulation of the connecting rod to the comb sector considerably simplifies the construction of the handling device, thus reducing the overall weight, the costs and the energy consumption. Moreover the handling device comprises a support structure suitable to support the transverse bearing pin through a revolving coupling on opposite side walls, thus assuring a secure and firm support of the parts in motion without the arising of vibrations. Also for this reason the control of the tilting motion driven to the combs is optimum, enabling high tilting frequencies with minimum vibrations and a delicate but effective end effect on the plants.

The apparatus can advantageously provide that the connection between the second comb sector and the connection rod is realized through the interposition of an intermediate binary member or link. In this case both comb sectors receive the motion drive from the connection rod which in turn is actuated by the gear means set in motion by the drive shaft, thus attaining a simple, cost-effective and energy-saving construction. In other words, the provision of the binary member or link avoids any direct cinematic connection between the comb sectors, thus simplifying even more the design of the handling device.

### Brief Description of the Drawings

Details of the invention shall be more apparent from the detailed description of different embodiments of the apparatus for picking olives and the like according to the invention, illustrated for indicative purposes in the attached drawings, wherein:
figure 1 shows a perspective view of the apparatus for picking olives according to the invention;
figure 2 shows a perspective view according to a different angle of the apparatus in hand without containment box;
figure 3 shows a perspective view of a detail of the apparatus in hand;
figure 4 shows a section view according to an axial median plane of the detail illustrated in figure 3;
figure 5 shows a perspective view of a further detail of the apparatus in hand;
figure 6 shows a plant view of the apparatus in hand without containment box;
figure 7 shows a perspective view of the apparatus in hand according to a further embodiment;
figure 8 shows a perspective view of the same embodiment of the apparatus according to the invention without the respective containment box;
figures 9 and 10 respectively show a section view according to an axial median plane and a perspective view of a detail of the embodiment illustrated in figures 7 and 8;
figure 11 shows a component of the detail illustrated in figure 10;
figure 12 shows a unit used in the apparatus in hand, according to the embodiment illustrated in the figures from 7 to 11;
figure 13 shows a perspective exploded view of a further embodiment of the apparatus according to the invention;
figures 14 and 15 show a front view and a detail view of the apparatus according to a different embodiment;
figures 16 and 17 show a front view and a detail view of the apparatus according to a further embodiment.

### Best Modes of Carrying Out the Invention

With particular reference to such figures, the apparatus for picking olives and the like is indicated in its entirety with 1.

The apparatus 1 comprises a support rod 2 suitable to be grasped at one end at a handle portion and inside which a drive shaft 3 is axially inserted.

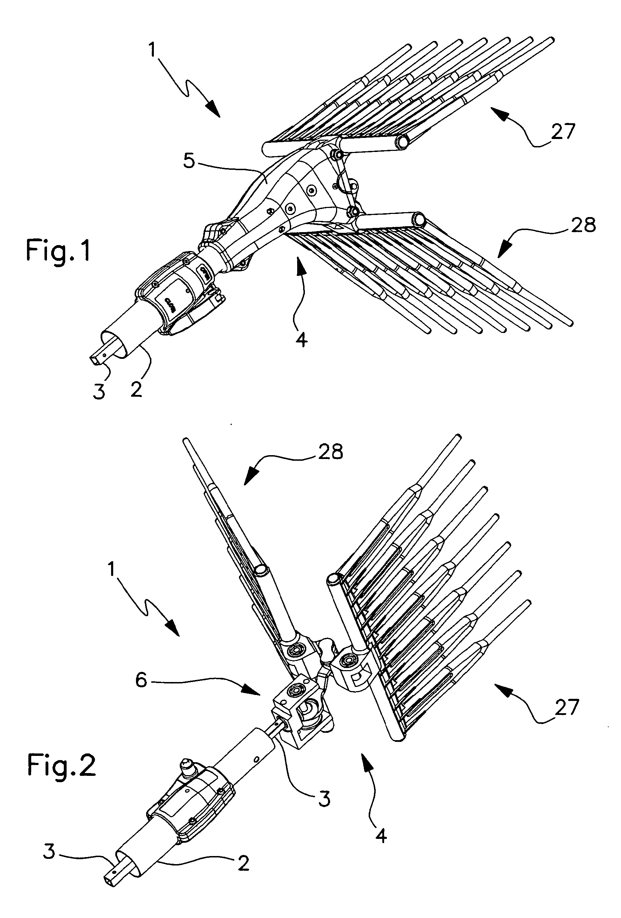

The apparatus 1 further comprises a shaker unit 4 provided with shaker means for example comb-shaped, suitable to be mounted at the top of the support rod 2. The shaker unit 4 comprises a containment box 5 suitable to contain a handling device 6 for the cited shaker means (fig. 1 and 2).

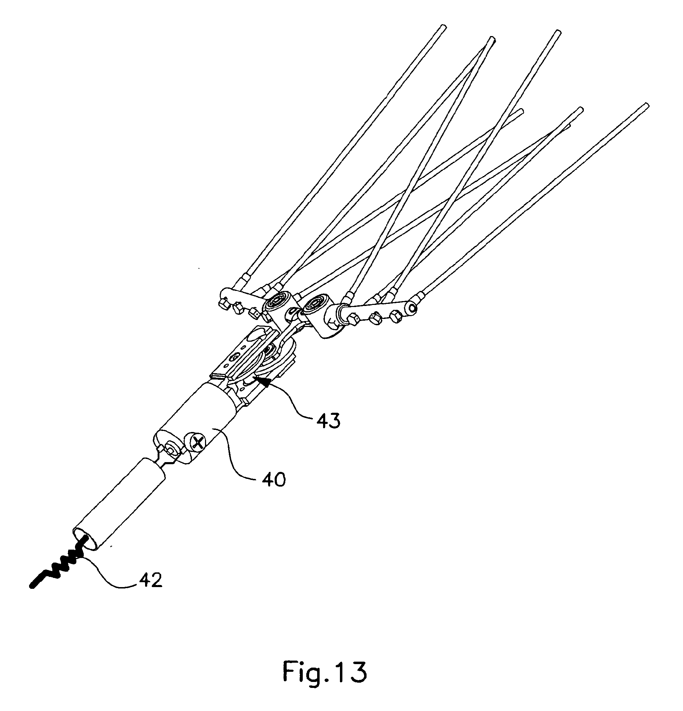

In a portion of the support rod 2 proximal to the handle is preferably arranged a motor member associated with a speed reduction group of known type, suitable to actuate in motion the shaker means of the shaker unit 4. Alternatively the cited motor member can be arranged at the top of the support rod 2, preferably inside the containment box 5. In such a case the motor member can be associated with a speed reduction group of known type, for example with gears, as described in the following and illustrated in figure 13, or with electronic speed control means. The handling device 6 comprises a support structure 7 for example fork-shaped, comprising a base 7a, a first side wall 7b and a second side wall 7c. The side walls 7b, 7c are arranged substantially perpendicular to the base 7a. In the base 7a is made a first through hole 8 for inserting the transmission means connected to the drive shaft 3, as described in the following. The through hole 8 preferably provides housing seats for rolling support means 9.

The support structure 7 is suitable to house conical gear means 10 comprising a drive wheel 11 inserted revolving in the first through hole 8 and constrained in a known way to the drive shaft 3 to receive the motion thereof, and a driven wheel 12, revolving about the axis of a bearing pin 13 oblique or transverse, for example perpendicular, with respect to the axis of the drive shaft 3. In particular, a first end of the bearing pin 13 is inserted revolving in a support seat 14 made in the first side wall 7b of the support structure 7, through the interposition of suitable rolling support means 15, of the type of ball bearings or equivalent means. Preferably the drive wheel 11 is made integral to a respective shaft portion, but it is alternatively possible to provide it to be made as an independent element, suitably keyed to the drive shaft 3 or to a connection portion.

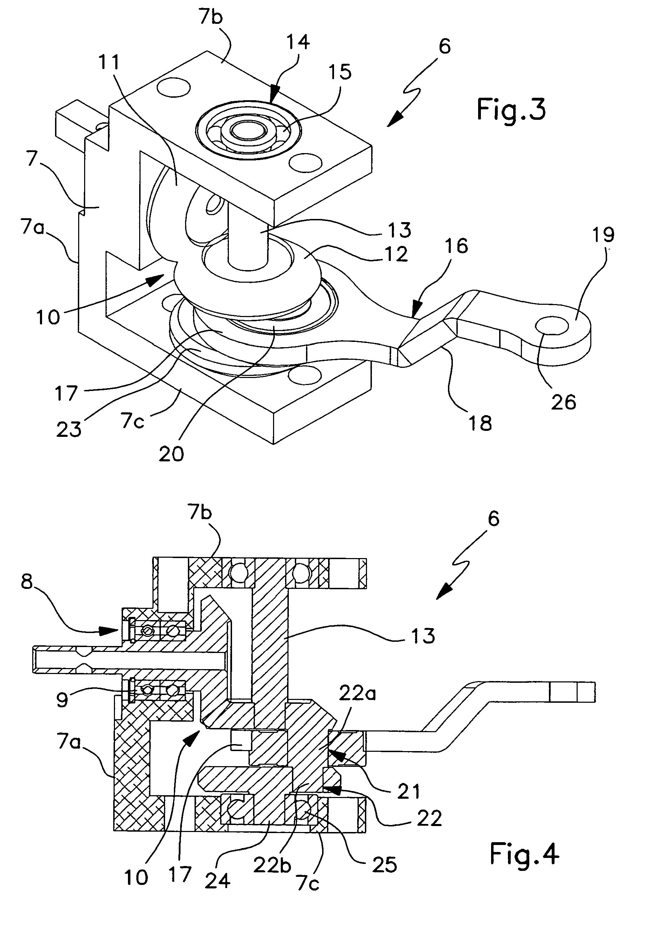

The handling device 6 further comprises a connecting rod transmission member 16 provided with an annular first connection portion 17, an intermediate arm 18 and a second connection portion 19. Preferably the arm 18 comprises a folded portion such that the first connection portion 17 and the second connection portion 19 are arranged in a substantially parallel way. Nevertheless it is possible to provide that the connection member 16 to be shaped in a different manner. According to an embodiment illustrated in particular in figures 3 and 4, the annular first connection portion 17 is rotatably inserted about a disc 20 eccentrically articulated to the driven wheel 12. In particular the disc 20 is articulated to the driven wheel 12 on an articulation pin 22 pivoted to an articulation hole 21 and carried in eccentric position by the same driven wheel 12. Preferably the articulation pin 22 comprises a first tract 22 having a diameter substantially corresponding to the diameter of the articulation hole 21 and a longitudinal extension corresponding to the thickness of the disc 20. The articulation pin 21 also comprises a second tract 22b such as coaxial prolongation of the first tract 22a, having diameter smaller than the one of the first tract 22a.

The second tract 22b of the articulation pin 22 is suitable to be pivoted eccentrically to a support disc 23, provided with a central pin 24 suitable to be rotatably supported by the side wall 7c of the support structure 7, through the interposition of rolling support means 25. It is to note that the bearing pin 13 has preferably a longitudinal extension such as to enable the insertion thereof in the driven wheel 12 without engaging the transmission member 16. Therefore the central pin 24 represents the extension of the bearing pin 13 cooperating in supporting the connection rod 16 by both side walls 7b and 7c of the support structure 7, thus minimizing the arising of vibrations and assuring a balanced support of the dynamic actions through the structure 7 instead of through other parts involved in the motion drive. Furthermore, the bearing pin 13 and the central pin 24 of the support disc 23 are preferably coaxial to allow the good functioning of the apparatus according to the present invention.

Preferably the second connection portion 19 of the connecting rod 16 has an annular shape, therefore comprising a unique connection hole 26.

A first and a second comb sector 27, 28 are suitable to be connected to the cited second connection portion 19 through connection means associated with said connection hole 26. The first and the second comb sector 27, 28 respectively comprise a crossbar 29, provided with a plurality of teeth 30 aligned to each other or with alternatively staggered lengths, arranged parallel to each other or radially from a correspondingly curved profile of the crossbar 29. In this case the insertion of the teeth 30 inside the foliage of the tree, in use, can occur in a particularly delicate and gradual way, minimizing the resistance actions exerted by the same foliage.

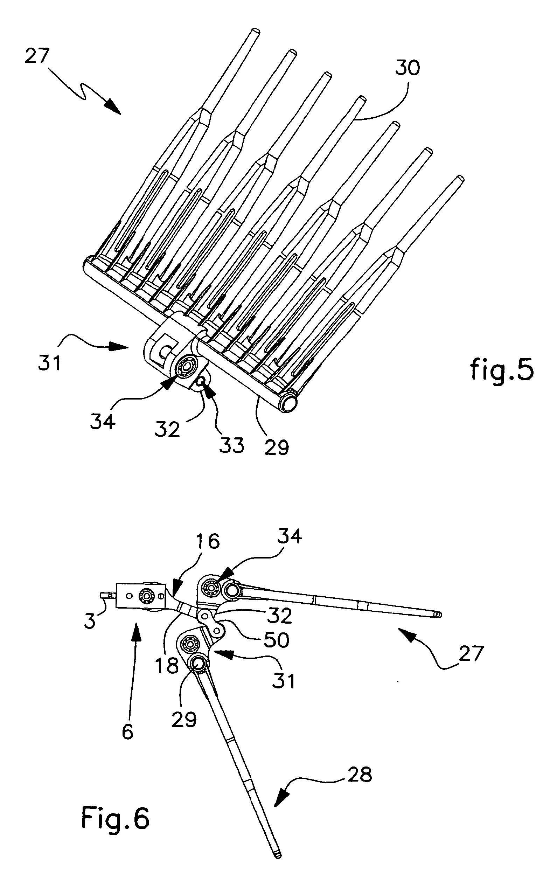

The teeth 30 can be realized through moulding integral with the crossbar 29 or fixed to the same by means of fixing means of screw type or the like. In both cases the crossbar 29 can comprise stiffening elements, for example of the type of one or more longitudinal ribbings, to give greater rigidity to the shaker means. In the illustrated embodiment the crossbars 29 of the first and the second comb sector 27, 28 are arranged substantially parallel to the bearing pin 13 (fig. 6). In such a case the first and the second comb sector 27, 28 are connected to the second connection portion 19 of the connecting rod 16 through a suitable articulation part 31 forming an extension of the comb sector itself (see fig. 5). The articulation part 31 preferably comprise a junction portion 32 provided with a junction hole 33 to enable the articulation to the second connection portion 19 of the rod 16 at the connection hole 26. The articulation portions 31 further provide respective articulation holes 34, for the revolving connection to the containment box 5. The articulation parts 31 are preferably provided in a substantially central area of the crossbar 29 respectively of the first and of the second comb sector 27, 28. It is to note that the housing of the crossbar 29, the articulation hole 34 and the junction hole 33 preferably shape a substantially right angle at the articulation hole 34. But different angular arrangements of the same elements can be provided.

According to the embodiment illustrated in figures from 1 to 6, the first comb sector 27 and the second comb sector 28 are reciprocally articulated through an arm-shaped binary member 50. The first comb sector 27 is instead directly articulated to the transmission member 16 at the respective articulation part 31. Therefore transmission member 16 is designed for directly driving the motion received from the driven wheel 12 to the first comb sector 27, thus considerably reducing the structural complexity, the weight and the energy consumption of the apparatus.

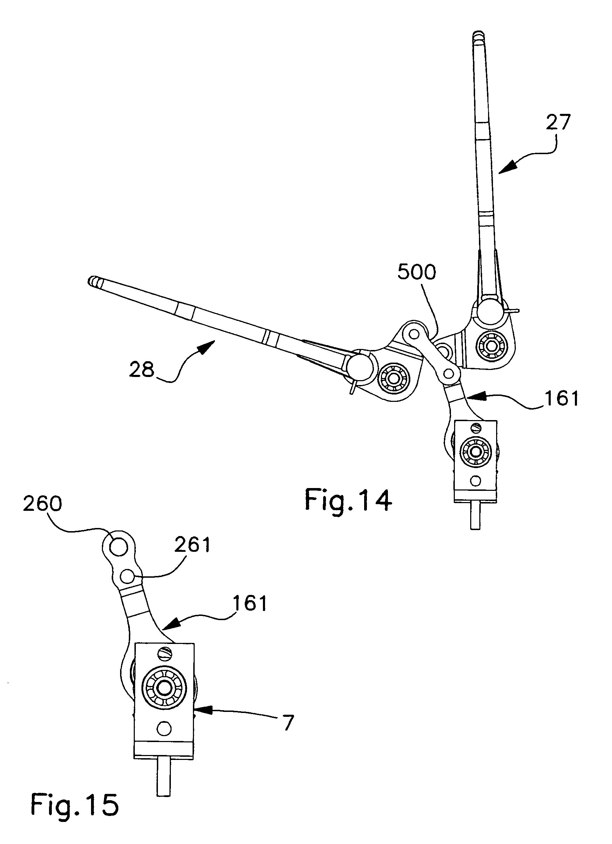

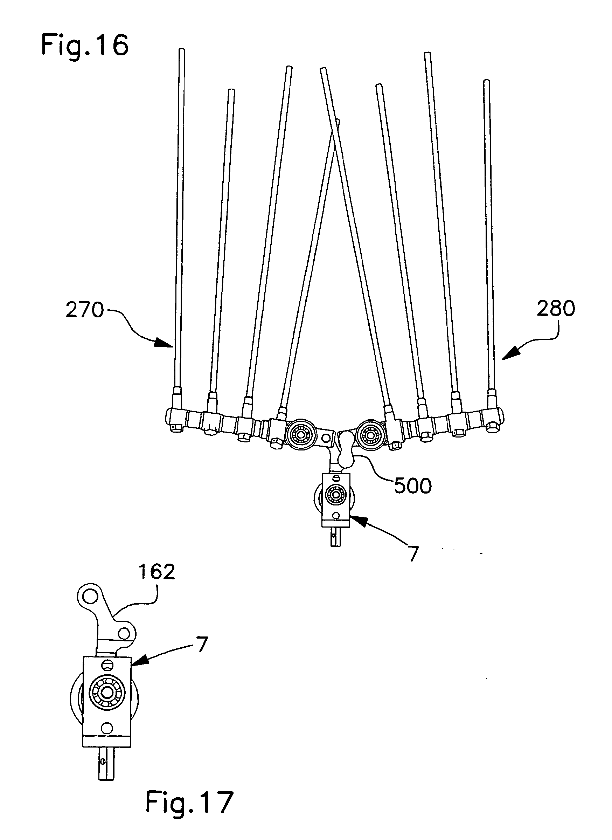

According to a different embodiment shown in figures 15 and 16, the binary member 500 serves as articulation means between the second comb sector 28 and the transmission member 161 which provides a first connection hole 260 for the direct connection to the fist comb sector 27 and a second connection hole 261 for the connection to the second comb sector 28 through the interposition of the binary member 500. In this case the tilting motion is not is not mediated between the combs, but transmitted to each comb directly from the transmission member 16 or from the latter only through the binary member 500. This allows a prompt cinematic reaction which is in phase with the motion of the transmission member 16. At the same time this solution is structurally very simple and able to lower the accuracy needed for the construction of the mechanical parts involved. The binary member 500 substantially serves as a link and is shaped as an arm provided with two articulation pins, thus it is very simple in the construction and in the assembling.

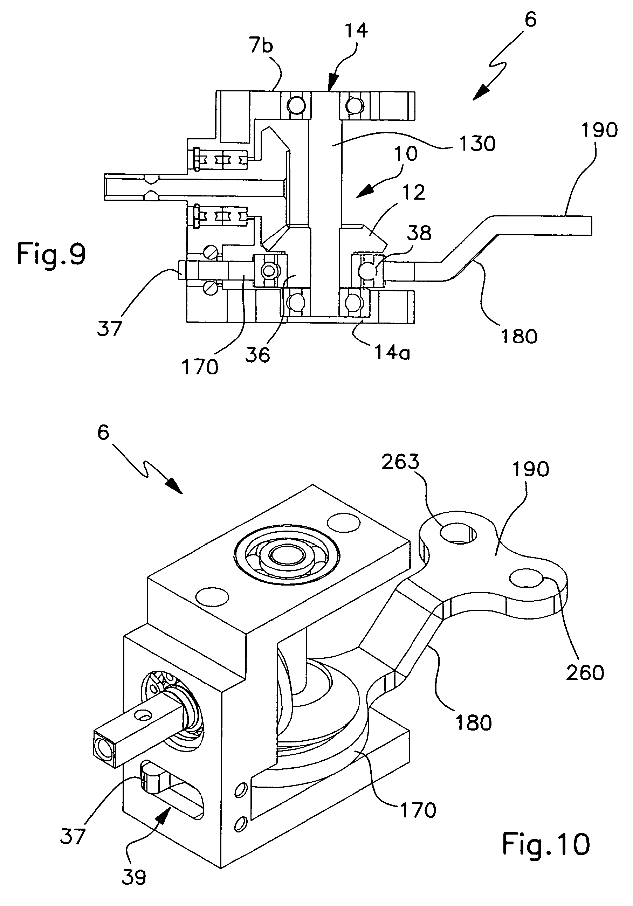

According to a further embodiment of the apparatus for picking olives according to the present invention, illustrated in the figures from 7 to 12, the handling device 6 comprises a bearing pin 130 which extends transversally from the first side wall 7b to the second side wall 7c of the support structure 7, in such a way as to enable the insertion to the opposite end in corresponding support seats 14, 14a realized respectively in the first side wall 7b and the second side wall 7c (fig. 9). In this embodiment, the driven wheel 12 of the gear means 10 comprises an eccentric sleeve 36, protruding from the side oriented towards the second side wall 7c. More precisely, the position of the sleeve is such that the bearing pin 130 axially inserted in the driven wheel 12 is arranged eccentric with respect to the sleeve 36.

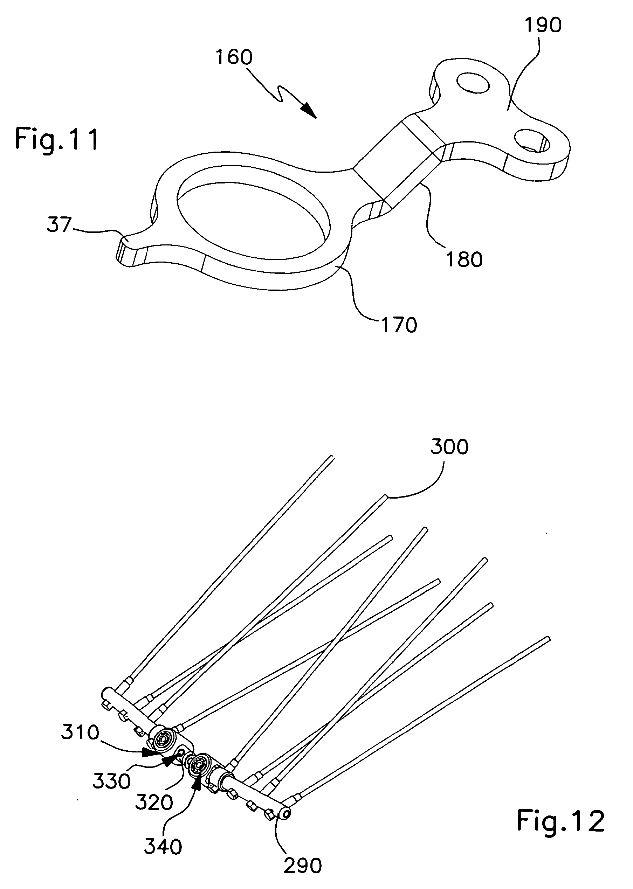

The same eccentric sleeve 36 is suitable to be connected rotating to a connection rod transmission member 160, comprising an annular base 170, an arm 180 and a connection portion 190 provided with a couple of transverse holes. Preferably the arm 180 has a inclined shape such that the connection portion 190 is on a plane substantially parallel to the annular base 170 (fig. 11). Yet it is possible to provide that the arm 180 to be differently shaped, for example straight. The transmission member 160 further comprises a guide tooth 37 protruding from the annular base 170 of the connecting rod 160 and in position opposite to the arm 180. The guide tooth 37 is suitable to engage a corresponding guide eyelet made in the base 7a of the support structure 7, in order to guide in a safe way the motion of the rod 160.

Practically the annular base 170 of the transmission member 160 is inserted about the sleeve 36 of the driven wheel 12 through the interposition of rolling support means 38.

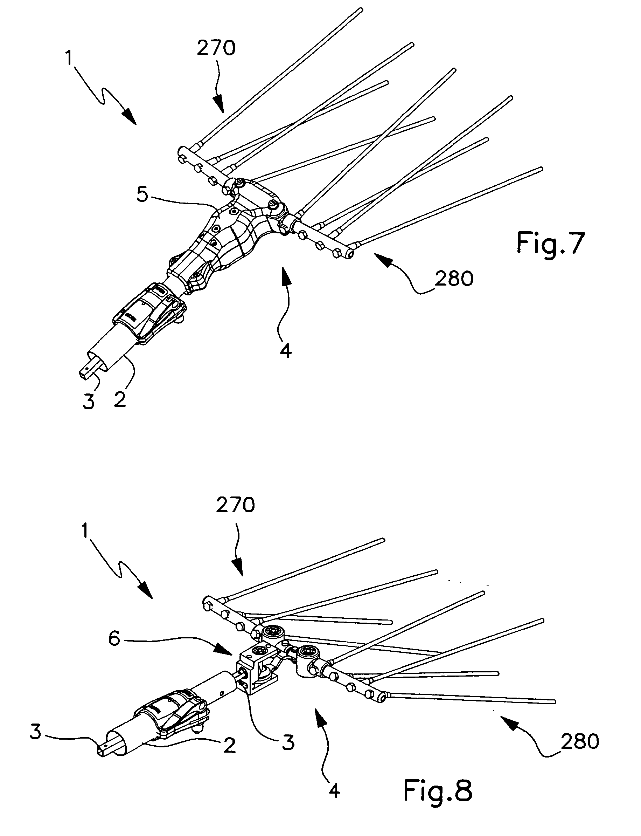

According to the described embodiment, a first and a second comb sector 270, 180 are suitable to be articulated beside a respective transverse hole of the connection portion 190 of the rod 160, at an end of the respective support crossbar 290 (fig. 8). The crossbar 290, on which is fixed a plurality of teeth 300, is for example rectilinear or curved, in this latter case to allow a radial arrangement of the teeth 300. The teeth 300 can be arranged on staggered planes, or on the same plane, can have a longitudinal extension slightly decreasing towards the external end of the crossbar 290, in a way as to make uniform the resistance opposed by the branches, in use, onto the plurality of the teeth 300 themselves.

Each comb sector 270, 280 is connected to the connection portion 190 by an articulation part 310 that comprises a junction portion 320, provided with a junction hole 330 to allow the articulation to the connection portion 190. Each articulation part 310 comprises a hole 340 for the articulation to the containment box 5.

In such a case the comb sectors 270, 280 are suitable to be mounted substantially on a same plane, suitable to be actuated alternatively mobile between a divaricated position and an approached position.

According to a different embodiment shown in figure 16 and 17, the second comb sector 280 is articulated to the transmission member 162 through the interposition of the articulation binary member 500, similarly to the embodiment illustrated in figures 14 and 15 and previously described. This solution enables an effective motion drive to the respective comb sector, which at the same time minimizes the wear of the parts in relative motion. In fact thanks to the link 500 it is possible to avoid the provision of the articulation eyelet 263 which in the embodiment illustrated in figure 10 is associated with the connection hole 260 of the transmission member 160. The articulation eyelet is subjected to wear and needs a high level of accuracy in the construction. The binary member or link 500 of the present embodiment, similarly to the embodiment illustrated in figures 14 and 15, is very easy to insert in the articulation holes and block in position through suitable means, such as a Seeger ring or the like. In both cited embodiments it is also possible to vary the shape and dimensions of the transmission member 161, 162 and correspondingly of the link 500, namely its extension to vary the distance between the connection holes, to modify the resulting motion of the comb, in particular the reciprocal phase shift in the tilting motion.

According to a further embodiment, illustrated in figure 13 associated with one of the just described embodiments, but not limited to this latter, the apparatus 1 comprises a motor member 40 arranged at the top of the support rod 2 at the support structure 7 of the handling device 6. The motor member 40 is for example of the interchangeable brushes type 41 or of equivalent type. So the motor member 40 provides an outlet shaft directly connected and coaxial to the shaft of the first toothed wheel 11 of the gear means 10. Electric connection cables 42 enable the power supply through the engagement of control means provided in a known way at the handle of the support rod 2. The motor member 40 is preferably associated with speed reduction means, for example of the mechanical type, or in substitution or in addition to these ones, with speed adjustment means of electronic type, in particular if the motor member is of "brushless" type. In the embodiment illustrated, for indicative and not limiting purposes, the motor member 40 is associated with a reduction unit 43 of the known gear type, supported by the support structure 7 between the gear means 10 and the transmission member 16, 160, to reduce in a desired manner the tilting frequency of the shaker means.

Such an embodiment, with the motor member aligned with the support rod 2, turns out to be particularly ergonomic, in that it is able to distribute in an optimal way the total weight of the apparatus. So the apparatus results particularly handy, a little encumbering and so minimally invasive with respect to the foliage of the tree to be treated.

The functioning of the apparatus for picking olives and the like according to the invention turns out to be easy to understand from the preceding description.

The actuation in rotation of the drive shaft 3 and of the first drive wheel 9 causes the rotation of the bearing pin 13 through the gear means 10. The transmission member 16, 160, 161, 162 being articulated eccentric to the axis of the bearing pin 13, the rotation of this latter produces a tilting movement of the comb sectors 27, 28, 270, 280 hinged both to the connection portion 19, 190 of the connection rod 16, 160, 161, 162 and to the containment box 5. The comb sectors 27, 28, 270, 280 tilt alternatively on facing planes or on one same plane, according to the embodiment of the apparatus, between an opening or divaricated configuration and a closing or converging configuration.

More precisely according to the first and second illustrated embodiments, the comb sectors 27, 28, arranged on facing planes, tilt between an opening position, wherein both comb sectors 27, 28 diverge, and a closing position, wherein the ends of the teeth of the first comb sector 27 are approached to the ends of the teeth 30 of the second comb sector 28. The aforesaid tilting motion occurs about respective fulcrums at the articulation hole 34 of the articulation parts 31 associated with the containment box 5.

In the other described embodiments, the comb sectors 270, 280 are arranged with a fan shape substantially on the same plane on the containment box 5. The cited comb sectors are suitable to tilt substantially in the plane containing both crossbars 290 of the comb sectors 270, 280 and the support rod 2.

The apparatus in hand attains the scope of performing the picking of olives and the like in an easy and efficient way.

Such a result is obtained in particular thanks to the handling device 6 provided with conical gear means 10 that enable to articulate in a safe and reliable manner the connecting rod transmission member 16, 160 through the actuation in rotation of the drive shaft 3. The transmission of the motion occurs in a particularly noiseless way without vibrations, thanks to the provision of stable support means for all the mobile parts. In particular both the drive wheel 11 and the driven wheel 12 of the gear means 10 are efficiently referred respectively to the base 7a and to both the side walls 7b, 7c of the support structure 7 through the interposition of the respective rolling support means. Such a handling device 6 is constituted by a reduced number of elements, which makes it light and compact, and thus easy to handle for the operator.

A characteristic of the apparatus in hand consists of the fact that the comb sectors 27, 28, 270, 280 pivoted to the containment box 5 are suitable to be easily inserted into the foliage of the tree, thanks to the particular conformation and arrangement of the teeth, as well as to the compact and extended shape of the shaker unit 4. In this sense the embodiment comprising the motor member 40 aligned with the support rod 2 and provided at the respective end of the same is particularly advantageous.

By virtue of the optimal transmission of the motion operated by the handling device 6, the apparatus turns out to be of minimal acoustic impact, further that of minimally invasive effect on the tree to be treated. In particular the vibrations are reduced to the minimum, in particular thanks to the substantially baalanced and symmetric distribution of the components subjected to a rotary motion.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for picking olives and the like, of the type comprising a support rod (2) suitable to be grasped; a shaker unit (4) suitable to be mounted at the top of said support rod (2); a first and a second comb sector (27, 28, 270, 280), each provided with a plurality of teeth (30, 300); a drive shaft (3) inserted axially inside said support rod (2) and suitable to be actuated in rotation, a handling device (6) connected to said drive shaft (3) to actuate in motion said comb sectors (27, 28, 270, 280), said handling device (6) comprising gear means (10) provided with a drive wheel (11) axially constrained to said drive shaft (3) and with a driven wheel (12) carried rotatably about the axis of a bearing pin (13, 130) transverse to said drive shaft (3); a connection rod transmission member (16, 160, 161, 162) articulated in position eccentric to said driven wheel (12), said first comb sector (27, 270) and said second comb sector (28, 280) being pivoted in distal positions to a containment box (5) suitable to contain said handling device (6), said apparatus being **characterized in that**
said connection rod transmission member (16, 160, 161, 162) is directly articulated to at least one of said first and second comb sector (27, 28, 270, 280), said connecting rod transmission member (16, 160, 161, 162) being provided with an annular first connection portion (17), an intermediate arm (18) and a second connection portion (19, 190) comprising a connection hole (26, 260), said first and second comb sector (27, 28, 270, 280) being connected to said second connection portion (19, 190) of said connection rod transmission member (16, 160, 161, 162) through connection means associated with said connection hole (26, 260) of said second connection portion (19, 190), in a way as to perform the handling of said comb sectors (27, 28, 270, 280) in a motion substantially tilting between a divaricated or opening configuration and an approached or closing configuration
and **in that**
said handling device (6) comprises a support structure (7) suitable to support said transverse bearing pin (13, 130) through revolving coupling on opposite side walls (7b, 7c).

2. Apparatus according to claim 1, **characterized in that** said annular first connection portion (17) is suitable to be associated revolving with a disc (20) pivoted eccentrically revolving to said driven wheel (12), said second connection portion (19) being suitable to be directly articulated to at least one said comb sector (27, 28, 270, 280) at said connection hole (26, 260, 263).

3. Apparatus according to claim 2, **characterized in that** said second connection portion (19) is articulated to said first comb sector (27), said second comb sector (28) being articulated to said first comb sector (27) by means of a binary member (50), and said first comb sector (27) and said second comb sector (28) being arranged facing and pivoted in distal positions to a containment box (5) suitable to contain said handling device (6).

4. Apparatus according to claim 2, **characterized in that** said second connection portion (19, 190) of said connection rod transmission member (161, 162) presents a first connection hole (260) for the articulation to said first comb sector (27, 270) and a second connection hole (261) articulated to an articulation binary member (500) or link further articulated to said second comb sector (28, 280).

5. Apparatus according to claim 2, **characterized in that** said second connection portion (190) of said transmission member (160) comprises a first connection hole directly articulated with said first comb sector (270) and a second connection hole in the shape of an articulation eyelet (263) directly articulated to said second comb sector (280), said first comb sector (270) and said second comb sector (280) being arranged side by side substantially on the same plane.

6. Apparatus according to one of the previous claims, **characterized in that** it comprises a motor member (40) arranged at the top of said support rod (2) aligned with the axis of said drive wheel (11).

7. Apparatus according to claim 6, **characterized in that** said motor member (42) is associated with speed reduction means (43) of the type having gears interposed between said gear means (10) and said transmission member (16, 160).

8. Apparatus according one of the previous claims, **characterized in that** said teeth (30, 300) of said first and second comb sector (27, 270, 28, 280) have a longitudinal extension decreasing from the axis of the same apparatus, so as to allow a gradual and delicate inlet inside a foliage of a tree to be treated.

## Patentansprüche

1. Vorrichtung zum Ernten von Oliven und gleichartigen Erzeugnissen, umfassend eine Haltestange (2), die gegriffen werden kann; eine Schütteleinheit (4), die an die Spitze der Haltestange (2) montiert werden kann; ein erstes und ein zweites Kammsegment (27, 28, 270, 280), von denen jedes mit einer Vielzahl von Zinken (30, 300) versehen ist; eine Antriebswelle (3), die axial in die Haltestange (2) eingesetzt ist und in Drehung versetzt werden kann; eine Bewegungsvorrichtung (6), die mit der Antriebswelle (3) verbunden ist, um die Kammsegmente (27, 28, 270, 280) in Bewegung zu versetzen, wobei diese Bewegungsvorrichtung (6) Zahnradmittel (10), die mit einem Antriebsrad (11), das achsgerecht an dieser Antriebswelle (3) fixiert ist, und einem angetriebenen Rad (12), das um die Achse eines quer zu dieser Antriebswelle (3) verlaufenden Lagerzapfens (13, 130) drehbar gelagert ist, versehen sind, und ein Pleuelübertragungselement (16, 160, 161, 162), das in einer exzentrischen Lage an das angetriebene Rad (12) angelenkt ist, umfassen, wobei das erste Kammsegment (27, 270) und das zweite Kammsegment (28, 280) in distalen Positionen an einem Behältergehäuse (5) drehbar gelagert sind, das diese Bewegungsvorrichtung (6) enthalten kann, wobei diese Vorrichtung **dadurch gekennzeichnet ist, dass**
das Pleuelübertragungselement (16, 160, 161, 162) an mindestens eines der ersten und zweiten Kammsegmente (27, 28, 270, 280) direkt angelenkt ist, wobei dieses Pleuelübertragungselement (16, 160, 161, 162) mit einem ersten ringförmigen Anschlussteil (17), einem Zwischenarm (18) und einem eine Anschlussbohrung (26, 260) umfassenden zweiten Anschlussteil (19, 190) versehen ist, wobei das erste und das zweite Kammsegment (27, 28, 270, 280) mit diesem zweiten Anschlussteil (19, 190) des Pleuelübertragungselements (16, 160, 161, 162) durch mit der Anschlussbohrung (26) des zweiten Anschlussteils (19, 190) verbundene Anschlussmittel so verbunden sind, dass die Betätigung dieser Kammsegmente (27, 28, 270, 280) mit einer im Wesentlichen zwischen einer gespreizten oder Öffnungskonfiguration und einer angenäherten oder Schließkonfiguration schwingenden Bewegung bewerkstelligt wird,
und dadurch, dass
diese Bewegungsvorrichtung (6) eine Lagerkonstruktion (7) umfasst, die geeignet ist, den quer verlaufenden Lagerzapfen (13, 130) durch eine drehbare Verbindung auf gegenüberliegenden Seitenwänden (7b, 7c) zu lagern.

2. Vorrichtung nach Anspruch 1, **dadurch gekennzeichnet, dass** der erste ringförmige Anschlussteil (17) geeignet ist, drehbar mit einer Scheibe (20) verbunden zu werden, die exzentrisch zum angetriebenen Rad (12) drehbar gelagert ist, wobei dieser zweite Anschlussteil (19) geeignet ist, direkt an mindestens ein Kammsegment (27, 28, 270, 280) in Entsprechung mit der Anschlussbohrung (26, 260, 263) angelenkt zu werden.

3. Vorrichtung nach Anspruch 2, **dadurch gekennzeichnet, dass** der zweite Anschlussteil (19) an das erste Kammsegment (27) angelenkt ist, wobei das zweite Kammsegment (28) mit Hilfe eines Doppelelements (50) an das erste Kammsegment (27) angelenkt ist und das erste Kammsegment (27) und das zweite Kammsegment (28) gegenüberliegend und in distalen Positionen an einem Behältergehäuse (5) drehbar gelagert sind, das geeignet ist, die Bewegungsvorrichtung (6) zu enthalten.

4. Vorrichtung nach Anspruch 2, **dadurch gekennzeichnet, dass** der zweite Anschlussteil (19, 190) des Übertragungselements (161, 162) eine erste Anschlussbohrung (260) zum Anlenken an das erste Kammsegment (27, 270) und eine an ein Gelenk- oder Anschlussdoppelelement (500) angelenkte zweite Anschlussbohrung (261) aufweist, die des Weiteren an das zweite Kammsegment (28, 280) angelenkt ist.

5. Vorrichtung nach Anspruch 2, **dadurch gekennzeichnet, dass** der zweite Anschlussteil (190) des Übertragungselements (160) eine direkt an das erste Kammsegment (270) angelenkte erste Anschlussbohrung und eine zweite Anschlussbohrung in der Form einer direkt an das zweite Kammsegment (280) angelenkten Gelenköse (263) umfasst, wobei das erste Kammsegment (270) und das zweite Kammsegment (280) im Wesentlichen in derselben Ebene nebeneinander angeordnet sind.

6. Vorrichtung nach einem der vorherigen Ansprüche, **dadurch gekennzeichnet, dass** sie ein Antriebselement (40) umfasst, das mit der Achse des Antriebsrads (11) gefluchtet an der Spitze der Haltestange (2) angeordnet ist.

7. Vorrichtung nach Anspruch 6, **dadurch gekennzeichnet, dass** das Antriebselement (42) mit zahnradartigen Drehzahlverringerungsmitteln (43) verbunden ist, die zwischen die Zahnradmittel (10) und das Übertragungselement (16, 160) eingefügt sind.

8. Vorrichtung nach einem der vorherigen Ansprüche, **dadurch gekennzeichnet, dass** die Zinken (30, 300) des ersten und des zweiten Kammsegments (27, 270, 28, 280) eine ausgehend von der Achse der Vorrichtung abnehmende Längsausdehnung aufweisen, um einen graduellen und schonenden Eintritt in eine Krone eines zu behandelnden Baums zu gestatten.

## Revendications

1. Appareil pour la récolte des olives et de produits similaires, du type comprenant une tige de support (2) propre à être empoignée; un groupe secoueur (4) propre à être monté au sommet de ladite tige de support (2); un premier et un second secteur à peigne (27, 28, 270, 280), chacun muni d'une pluralité de dents (30, 300); un arbre moteur (3) inséré axialement à l'intérieur de ladite tige de support (2) et propre à être actionné en rotation, un dispositif de mise en mouvement (6) connecté audit arbre moteur (3) pour mettre en mouvement lesdits secteurs à peigne (27, 28, 270, 280), ledit dispositif de mise en mouvement (6) comprenant des moyens à engrenages (10) munis d'une roue motrice (11) contrainte axialement audit arbre moteur (3) et d'une roue conduite (12) portée tournant autour de l'axe d'une épingle de support (13, 130) transversale audit arbre moteur (3), un organe di transmission (16, 160, 161, 162) à bielle articulée en position excentrique à ladite roue conduite (12), ledit premier secteur à peigne (27, 270) et ledit second secteur à peigne (28, 280) étant pivotés en positions distales à un boîtier (5) propre à contenir ledit dispositif de mise en mouvement (6), ledit appareil étant **caractérisé en ce que**
ledit organe de transmission (16, 160, 161, 162) à bielle est articulé directement à au moins un desdits premier et second secteur à peigne (27, 28, 270, 280), ledit organe de transmission (16, 160, 161, 162) à bielle étant pourvu d'une première portion de connexion (17) annulaire, un bras (18) intermédiaire et une seconde portion de connexion (19, 190) comprenant un trou de connexion (26, 260), lesdits premier et second secteur à peigne (27, 28, 270, 280) étant connectés à ladite seconde portion de connexion (19, 190) dudit organe de transmission (16, 160, 161, 162) à bielle à travers des moyens de connexion associés audit trou de connexion (26) de ladite seconde portion de connexion (19, 190), de façon à opérer la mise en mouvement desdits secteurs à peigne (27, 28, 270, 280) en un mouvement essentiellement oscillant entre une configuration écartée ou d'ouverture et une configuration approchée ou de fermeture
et **en ce que**
ledit dispositif de mise en mouvement (6) comprend une structure de support (7) propre à supporter ladite épingle de support (13, 130) transversale au moyen d'un accouplement rotatif sur des parois latérales (7b, 7c) opposées.

2. Appareil selon la revendication 1, **caractérisé en ce que** ladite première portion de connexion (17) annulaire est propre à être associée de façon rotative à un disque (20) pivoté rotatif de façon excentrique à ladite roue conduite (12), ladite seconde portion de connexion (19) étant propre à être articulée directement à au moins un desdits secteurs à peigne (27, 28, 270, 280) au niveau dudit trou de connexion (26, 260, 263).

3. Appareil selon la revendication 2, **caractérisé en ce que** ladite seconde portion de connexion (19) est articulée audit premier secteur à peigne (27), ledit second secteur à peigne (28) étant articulé audit premier secteur à peigne (27) au moyen d'un membre binaire (50), et ledit premier secteur à peigne (27) et ledit second secteur à peigne (28) étant disposés face à face et pivotés à des positions distales par rapport à un boîtier (5) propre à contenir ledit dispositif de mise en mouvement (6).

4. Appareil selon la revendication 2, **caractérisé en ce que** ladite seconde portion de connexion (19, 190) dudit organe de transmission (161, 162) à bielle présente un premier trou de connexion (260) pour l'articulation audit premier secteur à peigne (27, 270) e un second trou de connexion (261) articulé à un membre binaire (500) d'articulation ou connexion ultérieurement articulé audit second secteur à peigne (28, 280).

5. Appareil selon la revendication 2, **caractérisé en ce que** ladite second portion de connexion (190) dudit organe de transmission (160) comprend un premier trou de connexion directement articulé audit premier secteur à peigne (270) et un second trou de connexion sous la forme d'un oeillet d'articulation (263) directement articulé audit second secteur à peigne (280), ledit premier secteur à peigne (270) et ledit second secteur à peigne (280) étant disposés côte à côte essentiellement sur un même plan.

6. Appareil selon une des revendications précédentes, **caractérisé en ce qu'**il comprend un organe moteur (40) disposé au sommet de ladite tige de support (2) aligné à l'axe de ladite roue motrice (11).

7. Appareil selon la revendication 6, **caractérisé en ce que** ledit organe moteur (42) est associé à des moyens de réduction de la vitesse (43) du type à engrenages interposés entre lesdits moyens à engrenages (10) et ledit organe de transmission (16, 160).

8. Appareil selon une des revendications précédentes, **caractérisé en ce que** lesdites dents (30, 300) desdits premier et second secteur à peigne (27, 270, 28, 280) ont un développement longitudinal décroissant à partir de l'axe du même appareil, de façon à permettre une entrée progressive et délicate dans une frondaison d'un arbre à traiter.
